# EUROPÄISCHE PATENTANMELDUNG

(11) **EP 2 033 823 A2**
(43) Veröffentlichungstag der Anmeldung: **11.03.2009**
(21) Anmeldenummer: 08105069.2
(22) Anmeldetag: 19.08.2008
(51) Int. Cl.: B60H 1/24

(54) **Verschlussblende für eine Lüftungsöffnung, insbesondere für eine Lüftungsöffnung eines Kraftfahrzeuges**

(30) Priorität: 07.09.2007 DE 102007042621
(71) Anmelder: Carcoustics TechConsult GmbH, 51381 Leverkusen (DE)
(72) Erfinder: Blömeling, Heinz, 42799 Leichlingen (DE); Werheid, Detlev, 50968 Köln (DE)
(74) Vertreter: Cohausz & Florack

(57) **Zusammenfassung**

Die Erfindung betrifft eine Verschlussblende für eine Lüftungsöffnung, insbesondere für eine Lüftungsöffnung eines Kraftfahrzeuges, mit mindestens einem Formteil (1) zur Befestigung an der Lüftungsöffnung und mindestens einer Lüftungsklappe (6, 7), die eine in dem Formteil (1) ausgebildete Öffnung (4) verschließt und bei Überdruck in einem zugeordneten Raum selbsttätig einen Luftaustritt aus dem Raum über die Öffnung (4) erlaubt. Um bei einer solchen Verschlussblende das Auftreten von störenden Klappergeräuschen im Betrieb auszuschließen und eine kostengünstige Herstellung der Verschlussblende zu ermöglichen, sind das Formteil (1) und die mindestens eine Lüftungsklappe (6, 7) erfindungsgemäß aus flexiblem, geschlossenzelligem Schaumstoff hergestellt, wobei die mindestens eine Lüftungsklappe (6, 7) stoffschlüssig oder integral mit dem Formteil (1) verbunden ist.

## Beschreibung

Die Erfindung betrifft eine Verschlussblende für eine Lüftungsöffnung, insbesondere für eine Lüftungsöffnung eines Kraftfahrzeuges, mit mindestens einem Formteil zur Befestigung an der Lüftungsöffnung und mindestens einer Lüftungsklappe, die eine in dem Formteil ausgebildete Öffnung verschließt und bei Überdruck in einem zugeordneten Raum selbsttätig einen Luftaustritt aus dem Raum über die Öffnung erlaubt.

Derartige Verschlussblenden werden beispielsweise an Lüftungsöffnungen in Gebäudeaußenwänden montiert, insbesondere am Ende einer mit einem Gebläse versehenen Abluftleitung einer Dunstabzugshaube oder an Abluftöffnungen bzw. -leitungen von Badezimmern. Herkömmliche Verschlussblenden weisen mehrere jalousieartig ausgebildete Lüftungsklappen auf, die aus Metall oder Hartkunststoff gefertigt und in einem rahmenartigen Formteil schwenkbar gelagert sind. Bei ausgeschaltetem Gebläse verschließen die Lüftungsklappen die Lüftungsöffnung, so dass ein Eindringen von Staub und Lärm über die Lüftungsöffnung in den betreffenden Gebäuderaum verhindert wird. Zudem verringern die Lüftungsklappen im geschlossenen Zustand einen Wärmeverlust aus dem Gebäuderaum. Bei Betrieb des Gebläses werden die Lüftungsklappen dagegen aufgrund des mittels des Gebläses erzeugten Überdruckes aufgeschwenkt. Üblicherweise schwingen die Lüftungsklappen in Abhängigkeit des vom Gebläse erzeugten Überdruckes auf und zu. Das intermittierende Schließen der aus Metall oder Hartkunststoff gefertigten Lüftungsklappen erzeugt in der Regel störende Klappergeräusche.

Ferner werden derartige Verschlussblenden auch bei Kraftfahrzeugen verwendet, und zwar an Lüftungsöffnungen, die der Zwangsentlüftung des Fahrgast-, Kofferraumes bzw. Laderaumes dienen. Die über eine oder mehrere Frischluftleitungen zugeführte Luft erhöht den Luftdruck im Fahrgast- bzw. Laderaum, so dass ein Teil der Innenraumluft als Abluft über die jeweilige Lüftungsöffnung (Entlüftungsöffnung) entweicht. Die Lüftungsöffnungen sind dabei üblicherweise verdeckt, z.B. hinter dem hinteren Stoßfänger des Kraftfahrzeuges angeordnet. Es versteht sich, dass grundsätzlich über die Lüftungsöffnung Außenlärm in den Fahrgastraum eindringen bzw. Wärme aus dem Fahrgastraum nach außen entweichen kann. Die an der Lüftungsöffnung angebrachte Verschlussblende hat daher eine Schall- und Wärmeisolationsfunktion. Diesbezüglich sind bei Kraftfahrzeugen Verschlussblenden bekannt, die ein rahmenartiges Kunststoffspritzgießteil, jalousieartig ausgebildete Lüftungsklappen aus Elastomer und eine umlaufende Gummidichtung aufweisen. Die Ausbildung der Lüftungsklappen in Form von flexiblen Elastomerlamellen verhindert zwar störende Klappergeräusche beim intermittierenden Schließen der Lüftungsklappen (Lamellen); die Herstellung dieser bekannten Verschlussblenden ist jedoch aufwendig und verursacht relativ hohe Kosten.

Verschlussblenden der eingangs genannten Art sind beispielsweise aus der DE 10 2005 024 527 A1 und der DE 196 29 115 A1 bekannt. Die bekannten Verschlussblenden haben jeweils einen eine Öffnung begrenzenden Rahmen, der aus hartem Kunststoff gespritzt ist, und eine Lüftungsklappe aus einem Elastomerwerkstoff, wobei die Lüftungsklappe an den Rahmen angespritzt ist.

Der vorliegenden Erfindung liegt die Aufgabe zugrunde, eine Verschlussblende der eingangs genannten Art bereitzustellen, bei der keine störenden Klappergeräusche auftreten und die sich kostengünstig herstellen lässt.

Gelöst wird diese Aufgabe durch eine Verschlussblende mit den Merkmalen des Anspruchs 1.

Die erfindungsgemäße Verschlussblende umfasst mindestens ein Formteil zur Befestigung an einer entsprechenden Lüftungsöffnung und mindestens eine Lüftungsklappe, die eine in dem Formteil ausgebildete Öffnung verschließt und bei Überdruck in einem zugeordneten Raum selbsttätig einen Luftaustritt aus dem Raum über die Öffnung erlaubt. Erfindungsgemäß sind das Formteil und die mindestens eine Lüftungsklappe aus flexiblem, geschlossenzelligem Schaumstoff hergestellt, wobei die mindestens eine Lüftungsklappe stoffschlüssig oder vorzugsweise integral mit dem Formteil verbunden ist.

Da das mindestens eine Formteil und die mindestens eine Lüftungsklappe aus dem gleichen kostengünstigen Material, nämlich aus flexiblem, geschlossenzelligem Schaumstoff hergestellt sind, lässt sich die erfindungsgemäße Verschlussblende kostengünstiger als herkömmliche Verschlussblenden der oben genannten Art realisieren. Der geschlossenzellige Schaumstoff stellt dabei eine absolut klapperfreie Funktion der Verschlussblende sicher und verleiht ihr zugleich sehr gute Wärmeisolationseigenschaften. Besonders günstige Herstellungskosten ergeben sich für die erfindungsgemäße Verschlussblende, wenn deren mindestens eine Lüftungsklappe integral, also einstückig mit dem Formteil ausgebildet ist. In diesem Fall entfällt der Arbeitsschritt für die stoffschlüssige Verbindung von Formteil und Lüftungsklappe.

Ein weiterer Vorteil der erfindungsgemäßen Verschlussblende besteht in ihrem relativ geringen Gewicht. Flexibler, geschlossenzelliger Schaumstoff ist erheblich leichter als der Materialaufbau herkömmlicher Verschlussblenden, die zum Beispiel aus einem rahmenartigen Kunststoffspritzgießteil mit aus Elastomer hergestellten Lüftungsklappen und einer umlaufenden Gummidichtung aufgebaut sind. Insbesondere durch die bevorzugte einstückige Ausbildung der erfindungsgemäßen Verschlussblende lässt sich eine Gewichtsreduzierung gegenüber herkömmlichen mehrteiligen Verschlussblenden erzielen.

Nach einer weiteren vorteilhaften Ausgestaltung der erfindungsgemäßen Verschlussblende ist vorgesehen, dass deren Formteil rahmenförmig ausgebildet ist und einen mit einem Hinterschnitt versehenen Kragen aufweist. Der Hinterschnitt dient dabei einer einfachen und schnellen Montage der Verschlussblende an einer entsprechenden Lüftungsöffnung. Die Montage der erfindungsgemäßen Verschlussblende erfordert dann weder zusätzliche Befestigungsmittel noch die Verwendung von Werkzeugen.

Diesbezüglich sieht eine weitere bevorzugte Ausgestaltung der erfindungsgemäßen Verschlussblende vor, dass der Kragen an seinem Außenumfang mehrere im Bereich des Hinterschnitts ausgebildete Ausbuchtungen aufweist. Vorzugsweise sind dabei mehrere Paare solcher Ausbuchtungen vorhanden, wobei jeweils zwei Ausbuchtungen eines Paares einander gegenüberliegend angeordnet sind. Die Ausbuchtungen sind der Kante bzw. dem Randumfang der Lüftungsöffnung, die z.B. im Karosserieblech oder einer entsprechenden Wandung ausgebildet ist, zugeordnet. Der Kragen wird so dimensioniert, dass dessen Außenabmessungen geringfügig kleiner als die Innenabmessungen der Lüftungsöffnung sind. Die im Bereich des Hinterschnitts des Kragens ausgebildeten Ausbuchtungen sind dagegen erfindungsgemäß so dimensioniert, dass deren Außenabmessungen etwas größer als die Innenabmessungen der Lüftungsöffnung sind. Im montierten Zustand der Verschlussblende bewirken die Ausbuchtungen aufgrund der Flexibilität sowie Elastizität des Schaumstoffs, dass sich die in dem Formteil durch Ausschneiden der mindestens einen Lüftungsklappe gebildete Öffnung etwas verkleinert. Im montierten Zustand der Verschlussblende überlappt der Rand der Lüftungsklappe somit zumindest um das Maß einer bzw. zweier Ausbuchtungen die im Formteil ausgebildete Öffnung, so dass auch dann eine gute Abdichtung erzielt wird, wenn die mindestens eine Lüftungsklappe integral mit dem Formteil ausgebildet ist.

Ein besonders zuverlässiges Schließverhalten der mindestens einen Lüftungsklappe lässt sich erzielen, wenn gemäß einer weiteren bevorzugten Ausgestaltung der erfindungsgemäßen Verschlussblende die mindestens eine Lüftungsklappe über ein Filmscharnier mit dem Formteil verbunden ist. Das Filmscharnier stellt ein sehr flexibles, sehr leichtgängiges Scharnier dar, das aufgrund der auf die Lüftungsklappe wirkenden Schwerkraft sicherstellt, dass die Lüftungsklappe bei fehlendem oder zu geringem Überdruck die im Formteil ausgebildete Öffnung im wesentlichen dicht verschließt.

Nach einer weiteren bevorzugten Ausgestaltung der erfindungsgemäßen Verschlussblende weist das Formteil einen umlaufenden Außenflansch auf. Der Außenflansch überlappt bzw. umgreift die jeweilige Lüftungsöffnung, an der die erfindungsgemäße Verschlussblende montiert wird. Wenn der umlaufende Außenflansch des Formteils gemäß einer weiteren vorteilhaften Ausgestaltung als Hohlwulst ausgebildet ist, lässt sich selbst bei einer nicht ebenen, sondern etwas gekrümmten Oberfläche des die Lüftungsöffnung umgebendenden Randbereiches eine umlaufend dichtende Anlage des Außenflansches an der die Lüftungsöffnung begrenzenden Oberfläche erzielen, da das Formteil und somit der als Hohlwulst ausgebildete Außenflansch aus flexiblem, geschlossenzelligem Schaumstoff hergestellt sind, so dass sich der Außenflansch der Kontur der gekrümmten Oberfläche anpasst.

Weitere bevorzugte und vorteilhafte Ausgestaltungen der erfindungsgemäßen Verschlussblende sind in den Unteransprüchen angegeben.

Nachfolgend wird die Erfindung anhand einer mehrere Ausführungsbeispiele darstellenden Zeichnung näher erläutert. Es zeigen schematisch:
- Fig. 1: eine perspektivische Vorderansicht eines erfindungsgemäßen Formteils mit zwei Lüftungsklappen;
- Fig. 2: eine perspektivische Vorderansicht eines erfindungsgemäßen Trägers zur lösbaren Befestigung des Formteils der Fig. 1;
- Fig. 3: eine Schnittansicht einer aus dem Formteil der Fig. 1 und dem Träger der Fig. 2 gebildeten Verschlussblende im montierten Zustand;
- Fig. 4: eine Vorderansicht eines erfindungsgemäßen Formteils mit einer Lüftungsklappe;
- Fig. 5: eine Querschnittansicht des Formteils der Fig. 4 entlang der Schnittlinie V-V; und .
- Fig. 6: eine Querschnittansicht des Formteils der Fig. 4 entlang der Schnittlinie V-V im montierten Zustand.

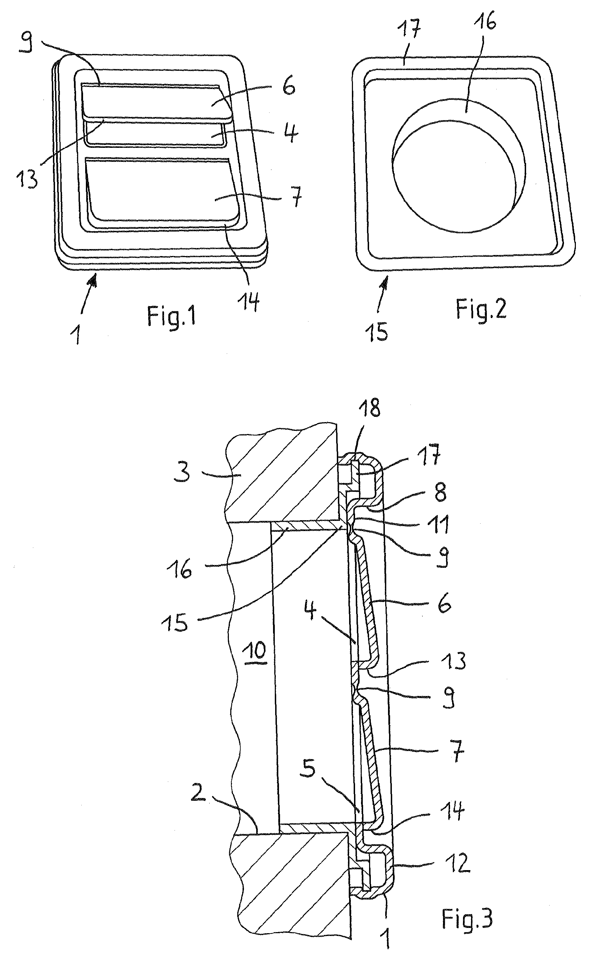

Die in den Figuren 1 und 3 dargestellte Verschlussblende besteht im Wesentlichen aus einem Formteil 1 zur Befestigung an einer Lüftungsöffnung 2, beispielsweise einer einer Dunstabzugshaube zugeordneten Lüftungsöffnung in einer Gebäudewand 3. In dem Formteil 1 sind Öffnungen 4, 5 ausgebildet, die jeweils mit einer Lüftungsklappe 6, 7 versehen sind. Das Formteil 1 und die Lüftungsklappen 6, 7 sind aus flexiblem, geschlossenzelligem Schaumstoff hergestellt. Bei dem Schaumstoff handelt es sich vorzugsweise um thermoplastischen Schaumstoff, insbesondere um Polyethylen-Schaumstoff.

Das Formteil 1 kann beispielsweise aus einer entsprechenden thermoplastischen Schaumstofffolie durch Tiefziehen und Stanzen hergestellt werden. Die thermoplastische Schaumstofffolie wird dabei vor und/oder während dem Tiefziehvorgang erhitzt und im Tiefziehwerkzeug gekühlt.

Das Formteil 1 ist rahmenförmig ausgebildet und weist einen Kragen 8 auf. In dem in Fig. 1 dargestellten Ausführungsbeispiel hat das Formteil 1 im Wesentlichen die Form eines quadratischen Rahmens. Bei Bedarf kann das Formteil 1 auch anders, beispielsweise kreisrund, oval, länglich rechteckig oder dreieckig ausgebildet werden.

Die Lüftungsklappen 6, 7 sind mit dem Formteil 1 integral verbunden. Sie werden durch im Wesentlichen C- oder U-förmig ausgeführte Schnitte in dem Formteil 1 erzeugt. Der Verbindungsbereich zwischen der jeweiligen Lüftungsklappe 6, 7 und dem Formteil 1 ist linienförmig ausgebildet. Vorzugsweise ist der Verbindungsbereich mit einer nutförmigen Einprägung versehen, die eine Art Filmscharnier 9 bildet. Der Verbindungsbereich ist durch die nutförmigen Einprägung sehr flexibel, so dass die Lüftungsklappe 6, 7 schon bei relativ geringem Überdruck in dem der Verschlussblende zugeordneten Raum 10 selbsttätig aufschwenkt und einen Luftaustritt aus dem Raum 10 über die Öffnung 4, 5 erlaubt. Bei fehlendem Überdruck im zugeordneten Raum 10 schließt die jeweilige Lüftungsklappe 6, 7 die zugehörige Öffnung 4 bzw. 5. In Fig. 1 ist die obere Lüftungsklappe 6 im aufgeschwenkten Zustand dargestellt.

Das Formteil 1 hat einen umlaufenden, die Öffnungen 4, 5 definierenden Absatz 11. Ferner weist das Formteil 1 einen umlaufenden Außenflansch 12 auf. Der Außenflansch 12 ist als Hohlwulst ausgebildet. Der Absatz 11 springt gegenüber der Vorderseite bzw. dem Außenflansch 12 des Formteils zurück. Die Lüftungsklappen 6, 7 sind gewölbt ausgebildet und weisen jeweils einen als Dichtfläche dienenden Kragen 13, 14 auf. In der Schließstellung stehen die Lüftungsklappen 6, 7 nicht gegenüber dem Außenflansch 12 vor (vgl. Fig. 3).

Des Weiteren kann die erfindungsgemäße Verschlussblende einen das Formteil 1 tragenden Träger 15 als separates Zusatzteil umfassen. Der in den Figuren 2 und 3 dargestellte Träger 15 ist rückseitig mit einem zu den Lüftungsklappen 6, 7 hin offenen Rohrstutzen 16 versehen, an dem eine Entlüftungsleitung, beispielsweise eine flexible, gewellte Dunstabzugsleitung angeschlossen werden kann. An seiner Vorderseite weist der Träger 15 einen abgesetzten, flanschförmigen Kragen 17 auf, an dem das Formteil 1 durch Verrastung befestigbar ist. Der als Hohlwulst ausgebildete Außenflansch 12 des Formteils 1 wird hierzu auf den an der Vorderseite des Trägers 15 vorstehenden Kragen 17 aufgesteckt. An seiner Innenseite weist der Hohlwulst 12 eine umlaufende Nut 18 auf. Die mit dem Außenrand des flanschförmigen Kragens 17 verrastet. Der Träger 15 ist vorzugsweise aus Polypropylen, Polystyrol oder Acrylnitril-Butadien-Styrol hergestellt.

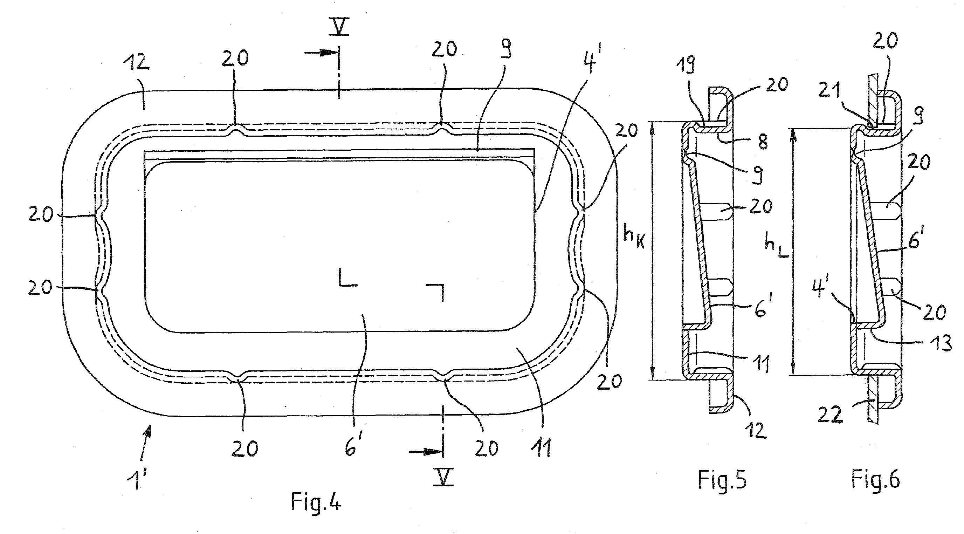

In den Figuren 4 bis 6 ist ein weiteres Ausführungsbeispiel einer erfindungsgemäßen Verschlussblende dargestellt. In diesem Beispiel ist das aus flexiblem, geschlossenzelligem Schaumstoff hergestellte Formteil 1' nur mit einer Lüftungsklappe 6' versehen, die eine in dem Formteil ausgebildete Öffnung 4' verschließt und bei Überdruck in einem der Verschlussblende zugeordneten Raum, beispielsweise einem Fahrzeuginnenraum, aufschwenkt und somit einen Luftaustritt aus dem Raum über die Öffnung 4' erlaubt.

Das rahmenförmige Formteil 1' ist im wesentlichen oval ausgeführt. Es weist wiederum einen umlaufenden Außenflansch 12 auf, der als Hohlwulst ausgebildet ist. Die mit der Lüftungsklappe 6' versehene Öffnung 4' ist in einem gegenüber dem Außenflansch 12 zurückspringenden Absatz 11 des Formteils 1' ausgebildet, der zusammen mit dem Außenflansch 12 umläuft.

Die gewölbte ausgebildete Lüftungsklappe 6' ist einstückig mit dem Formteil 1' ausgebildet. Der linienförmige Verbindungsbereich von Lüftungsklappe 6' und Formteil 1' ist als Filmscharnier 9 ausgebildet. Das Formteil 1' weist einen mit einem Hinterschnitt 19 versehenen Kragen 8 auf. An seinem Außenumfang weist der Kragen 8 mehrere Ausbuchtungen 20 auf, die im Bereich des Hinterschnitts 19 ausgebildet sind. Es ist zu erkennen, dass mehrere Paare der Ausbuchtungen vorhanden sind, wobei jeweils zwei Ausbuchtungen 20 eines Paares einander gegenüberliegend angeordnet sind. Die Ausbuchtungen 20 sind sowohl an den Längsseiten als auch an den kürzen Querseiten des Kragens 8 ausgebildet.

Die Ausbuchtungen 20 sind auf den Randumfang einer zugeordneten Lüftungsöffnung 21, die z.B. in einem Karosserieblech 22 oder einer Wandung ausgebildet, abgestimmt. Der Kragen 8 ist so dimensioniert, dass dessen Außenabmessungen geringfügig kleiner als die Innenabmessungen der Lüftungsöffnung 21 sind. Die Ausbuchtungen 20 sind dagegen so dimensioniert, dass deren Außenabmessungen etwas größer als die Innenabmessungen der Lüftungsöffnung 21 sind. Im montierten Zustand der Verschlussblende bewirken die Ausbuchtungen 20 eine Verkleinerung der mit der Lüftungsklappe 6' versehenen Öffnung 4'. Im montierten Zustand der Verschlussblende überlappt der Rand der Lüftungsklappe 6', der durch deren Ausschnitt aus dem Formteil 1' definiert ist, etwa um das Maß einer bzw. zweier Ausbuchtungen 20 die Öffnung 4'. Hierdurch ergibt sich eine gute Abdichtung der Öffnung 4' durch die integral mit dem Formteil 1' ausgebildete Lüftungsklappe 6'. In Fig. 5 ist mit h_{K} die Außenabmessung bzw. Höhe bezeichnet, die durch zwei gegenüberliegende, an den Längsseiten des Kragens 8 ausgebildete Ausbuchtungen 20 definiert ist, während in Fig. 6 mit h_{L} die Innenabmessung bzw. Höhe der Lüftungsöffnung 21 bezeichnet ist.

Die Ausführung der Erfindung ist nicht auf die vorstehend beschriebenen und in der Zeichnung dargestellten Ausführungsbeispiele beschränkt. Vielmehr sind eine Vielzahl weiterer Varianten möglich, die auch bei grundsätzlich abweichender Gestaltung von dem in den beiliegenden Ansprüchen angegebenen Erfindungsgedanken Gebrauch machen. So kann die mindestens eine Lüftungsklappe 6' beispielsweise auch durch Verschweißung oder Verklebung stoffschlüssig mit dem Formteil 1' verbunden sein.

## Patentansprüche

1. Verschlussblende für eine Lüftungsöffnung, insbesondere für eine Lüftungsöffnung eines Kraftfahrzeuges, mit mindestens einem Formteil (1; 1') zur Befestigung an der Lüftungsöffnung (2; 21) und mindestens einer Lüftungsklappe (6, 7; 6'), die eine in dem Formteil ausgebildete Öffnung (4, 5; 4') verschließt und bei Überdruck in einem zugeordneten Raum selbsttätig einen Luftaustritt aus dem Raum über die Öffnung (4, 5; 4') erlaubt, wobei das Formteil (1; 1') und die mindestens eine Lüftungsklappe (6, 7; 6') aus flexiblem, geschlossenzelligem Schaumstoff hergestellt sind, und wobei die mindestens eine Lüftungsklappe (6, 7; 6') stoffschlüssig oder integral mit dem Formteil (1; 1') verbunden ist.

2. Verschlussblende nach Anspruch 1,
**dadurch gekennzeichnet, dass**
das Formteil (1; 1') rahmenförmig ausgebildet ist und einen mit einem Hinterschnitt (19) versehenen Kragen (8) aufweist.

3. Verschlussblende nach Anspruch 2,
**dadurch gekennzeichnet, dass**
der Kragen (8) an seinem Außenumfang mehrere im Bereich des Hinterschnitts (19) ausgebildete Ausbuchtungen (20) aufweist.

4. Verschlussblende nach Anspruch 3,
**dadurch gekennzeichnet, dass**
mehrere Paare der Ausbuchtungen (20) vorhanden sind, wobei jeweils zwei Ausbuchtungen (20) eines Paares einander gegenüberliegend angeordnet sind.

5. Verschlussblende nach einem der Ansprüche 1 bis 4,
**dadurch gekennzeichnet, dass**
das Formteil (1; 1') einen umlaufenden Außenflansch (12) aufweist.

6. Verschlussblende nach Anspruch 5,
**dadurch gekennzeichnet, dass**
der Außenflansch (12) als Hohlwulst ausgebildet ist.

7. Verschlussblende nach einem der Ansprüche 1 bis 6,
**dadurch gekennzeichnet, dass**
das Formteil (1, 1') einen umlaufenden, die Öffnung (4, 5; 4') definierenden Absatz (11) aufweist.

8. Verschlussblende nach einem der Ansprüche 1 bis 7,
**dadurch gekennzeichnet, dass**
die mindestens eine Lüftungsklappe (6, 7; 6') über ein Filmscharnier (9) mit dem Formteil (1; 1') verbunden ist.

9. Verschlussblende nach einem der Ansprüche 1 bis 8,
**dadurch gekennzeichnet, dass**
die mindestens eine Lüftungsklappe (6, 7; 6') gewölbt ausgebildet ist und einen als Dichtfläche dienenden Kragen (13, 14) aufweist.

10. Verschlussblende nach einem der Ansprüche 1 bis 9, des weiteren umfassend einen das Formteil (1) tragenden Träger (15), der rückseitig mit einem Rohrstutzen (16) versehen ist, wobei der Rohrstutzen (16) zu der mindestens einen Lüftungsklappe (6, 7) hin offen ist.

11. Verschlussblende nach Anspruch 10,
**dadurch gekennzeichnet, dass**
der Träger (15) an seiner Vorderseite einen Kragen (17) aufweist, an dem das Formteil (1) durch Verrastung befestigbar ist.
